# EUROPÄISCHE PATENTANMELDUNG

(11) **EP 1 388 430 A1**
(43) Veröffentlichungstag der Anmeldung: **11.02.2004**
(21) Anmeldenummer: 03014003.2
(22) Anmeldetag: 21.06.2003
(51) Int. Cl.: B43M 5/04, B65D 27/14, B29C 65/00

(54) **Vorrichtung zum Verschliessen von Briefumschlägen aus Kunststoff**

(30) Priorität: 07.08.2002 DE 20212112 U
(71) Anmelder: Pfankuch Maschinen GmbH, 22926 Ahrensburg (DE)
(72) Erfinder: Pfankuch, Claus Karl, 22359 Hamburg (DE)
(74) Vertreter: von Raffay, Vincenz, Dipl.-Ing.

(57) **Zusammenfassung**

Die Vorrichtung zum Verschließen von Briefumschlägen aus Kunststoff, insbesondere Polypropylen, dient dem schnellen und sicheren Verschließen der Briefumschläge, wobei eine möglichst einfache und kostengünstige Arbeitsweise erreicht werden soll. Dieses geschieht grundsätzlich dadurch, dass eine Klebestation 3 vorgesehen ist, die im Anschluß an das Befüllen des Umschlages 6 eine durch Lichtbestrahlung aktivierbaren oder aushärtbaren Kleber auf zumindest eine der zu verklebenden Flächen des Umschlages aufträgt, und dass in Förderrichtung im Anschluß an die Klebestation eine Einrichtung 9 zur Lichtbestrahlung des Klebststoffauftrages vorgesehen ist. Vorzugsweise handelt es sich um eine Klebestation, die einen durch UV-Bestrahlung aushärtbaren Kleber aufbringt und durch UV-Bestrahlung für eine Aushärtung des Klebstoffes sorgt.

## Beschreibung

Die Erfindung betrifft eine Vorrichtung nach dem Oberbegriff des Anspruches 1.

Es ist bekannt, dass vorgefertigte Briefumschläge aus Papier bei der maschinellen Befüllung dadurch automatisch verschlossen werden, dass der bei der Herstellung des Umschlages auf zumindest eine zu verklebende Fläche aufgebrachte wasserlösliche Klebstoff durch Befeuchtung aktiviert wird. Anschließend wird die Umschlagklappe umgeklappt, so dass das Verkleben erfolgt. Die gegebenenfalls überschüssige Feuchtigkeit muß vom Papier abgenommen werden. Briefumschläge aus Kunststoff, z.B. Polypropylen, können bisher jedoch nur mit aufwendigen Heißschmelzklebe-Verfahren sicher verschlossen werden, da sich ein wasserlöslicher Klebstoff nicht sicher aufbringen läßt und später auch keine verläßliche, schließende Verbindung entsteht.

Der Erfindung liegt nun die Aufgabe zugrunde, eine Vorrichtung der eingangs genannten Art zu schaffen, durch die es möglich ist, vorgefertigte Briefumschläge aus Kunststoff sicher und schnell zu verschließen, wobei eine möglichst einfache und kostengünstige Arbeitsweise erreicht werden soll.

Diese Aufgabe wird grundsätzlich durch das Kennzeichen des Anspruches 1 gelöst.

Die erfindungsgemäße Vorrichtung arbeitet mit einem durch Lichtbestrahlung aktivierbaren oder aushärtbaren Kleber, der auf zumindest eine der zu verklebenden Flächen vorzugsweise die Umschlagsrückseite aufgebracht wird. Im Anschluß daran, wird die Umschlagklappe umgeschlagen und der Klebstoff wird durch Lichtbestrahlung aktiviert oder ausgehärtet. In vorteilhafter Weise handelt es sich um einen durch UV-Bestrahlung aushärtbaren Klebstoff, der durch eine Einrichtung zur UV-Bestrahlung ausgehärtet wird.

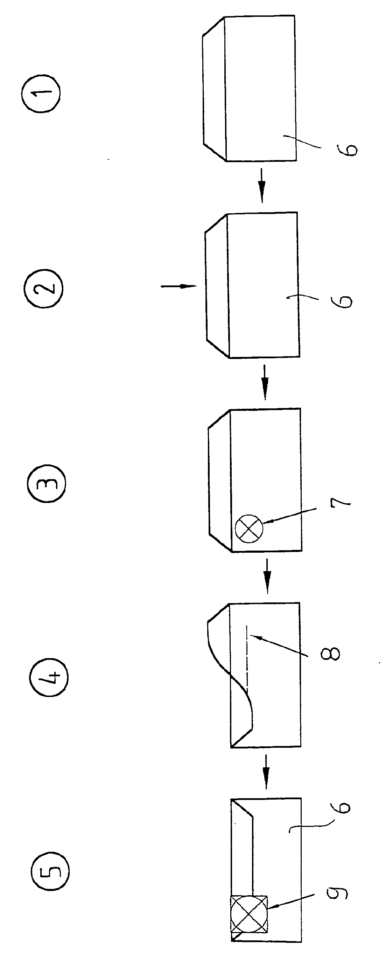

Im folgenden wird die Erfindung unter Hinweis auf die Zeichnung näher erläutert.

In der einzigen Figur ist schematisch der Ablauf des Befüllens und Verschließens eines Briefumschlages in einer Vorrichtung nach der Erfindung dargestellt.

Es sind insgesamt fünf Positionen gezeigt:
- 1.: Anlegen
- 2.: Befüllen
- 3.: Klebstoffauftrag
- 4.: Verschließen
- 5.: Klebstoffaktivierung

Der vorgefertigte Briefumschlag 6 aus Polypropylen wird in die Anlegestation 1 eingestapelt, von unten aus dem Schacht vereinzelnd entnommen und dann an die getaktete Fördereinrichtung zur Befüllung 2 geführt. Ein Takt nach der Befüllung 3 setzt eine mit druckbeaufschlagte Spendedüse 7 auf die rückseitige Oberfläche des Briefumschlages 6 auf und spendet im Durchlauf eine durch eine Kontrolleinrichtung vorgegebene Menge durch Lichtbestrahlung aktivierbaren Klebstoffes 8. Im darauffolgenden Takt wird die Briefumschlagklappe geschlossen und durchläuft im nächstfolgenden Taktzyklus 5 eine intensive Lichtbestrahlung, die den Klebstoff spontan aktiviert und zur Verklebung bringt. Die Reaktionszeit ist so kurz, dass auch bei kritischen Geschwindigkeitsbereichen der Verarbeitung eine sichere Verklebung gewährleistet ist.

In vorteilhafter Weise wird als Klebstoff ein durch UV-Bestrahlung aushärtbarer Klebstoff durch die Spendedüse 7 aufgetragen. Die Einrichtung 9 sendet dann ein entsprechendes UV-Licht aus.

## Patentansprüche

1. Vorrichtung zum Verschließen von Briefumschlägen aus Kunststoff, insbesondere Polypropylen, **dadurch gekennzeichnet, dass** eine Klebestation (3) vorgesehen ist, die im Anschluß an das Befüllen des Umschlages (6) einen durch Lichtbestrahlung aktivierbaren oder aushärtbaren Kleber auf zumindest eine der zu verklebenden Flächen des Umschlages aufträgt und
dass in Förderrichtung im Anschluß an die Klebestation eine Einrichtung (9) zur Lichtbestrahlung des Klebstoffauftrages vorgesehen ist.

2. Vorrichtung nach Anspruch 1, **dadurch gekennzeichnet, dass** durch die Klebestation ein durch UV-Bestrahlung aushärtbarer Kleber aufgebracht wird und dass in Förderrichtung im Anschluß an die Klebestation (3) eine Einrichtung (9) zur UV-Bestrahlung des Klebstoffes vorgesehen ist.
